(19) Europäisches Patentamt
European Patent Office
Office européen des brevets

(11) **EP 2 960 371 B1**

(12) **EUROPÄISCHE PATENTSCHRIFT**

(45) Veröffentlichungstag und Bekanntmachung des Hinweises auf die Patenterteilung:
**09.08.2017   Patentblatt 2017/32**

(51) Int Cl.:
*E01B 35/00* *(2006.01)*     *G01B 11/00* *(2006.01)*

(21) Anmeldenummer: **14174674.3**

(22) Anmeldetag: **27.06.2014**

(54) **Vorrichtung zum Vermessen von Gleisen**

Device for measuring tracks

Dispositif de mesure de voies ferrées

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.12.2015   Patentblatt 2015/53**

(73) Patentinhaber: **HP3 Real GmbH**
**1010 Wien (AT)**

(72) Erfinder: **Lichtberger, Bernhard**
**4230 Pregarten (AT)**

(74) Vertreter: **Patentanwaltskanzlei Hübscher**
**Spittelwiese 4**
**4020 Linz (AT)**

(56) Entgegenhaltungen:
**EP-A1- 0 135 610     EP-A1- 0 520 342**
**DE-U1- 9 308 435     US-A- 3 107 168**
**US-A- 4 155 176**

**Beschreibung**

Die Erfindung bezieht sich auf eine Vorrichtung zum Vermessen von Gleisen, zur Steuerung und Regelung von Gleisbaumaschinen, mit zwei äußeren, einem vorderen und einem hinteren, gleisfahrbaren Messwagen und einem dazwischen angeordneten mittleren gleisfahrbaren Messwagen, wobei den äußeren Messwagen je wenigstens ein zum mittleren Messwagen weisender Positionsgeber zugeordnet ist und am mittleren Messwagen ein Empfänger angeordnet ist.

Eine derartige Vorrichtung ist aus der EP 135 610 A1 bekannt. Dabei trägt der mittlere Meßwagen eine Optik, die auf den jeweiligen Positionsgeber ausgerichtet wird. Damit sollen Raumpunkte vermessern werden, indem Sender und Empfänger um deren gegenseitigen Abstand in Intervallpositionen gemeinsam verfahren werden und aus den ermittelten Differenzwinkeln zwischen Empfänger und Sender eine Raumkurve ermittelt wird. Eine aktive Steuerung einer kontinuierlich vorfahrenden Arbeitsmaschine in Abhängigkeit der Messdaten ist damit nicht möglich.

Die Verwendung von zwei optischen Sensoren zum Vermessen von Gleisen ist aus der US 4155176 A bekannt. Damit kann lediglich die Richtung des Gleises in einer Ebene vermessen werden. Eine aktive Steuerung einer kontinuierlich vorfahrenden Arbeitsmaschine in Abhängigkeit der Messdaten ist damit ebenso nicht möglich.

Eine rein optische Vorrichtung zur Vermessung von Gleisen offenbart die US 3107168 A. Eine Auswertung mittels Sensoren aufgenommener Messdaten ist nicht vorgesehen.

Solche optischen Mess- und in weiterer Folge Steueranlagen für Gleisstopfmaschinen, dienen dazu die Ist-(Seiten-)Lage eines Gleises und die Ist-Höhenlage eines Gleises gleichzeitig zu erfassen. Dazu werden gemäß dem Stand der Technik auf einer Gleisstopfmaschine drei Messwagen auf dem Gleis geführt. Üblich sind Messanlagen die Stahlsehnen benutzen (DE 10337976 A). Zur Messung ist eine Stahlsehne zwischen dem vorderen und dem hinteren Messwagen gespannt. Der mittlere Wagen trägt einen die Auslenkung der Sehne messenden Sensor. Da sich bei Gleisstopfmaschinen in der Nähe dieses Sensors auch zum Verdichten des Gleises notwendige Stopfaggregate befinden, ist die Sehne in engen Bögen oftmals hinderlich. Damit die Stopfaggregate nicht mit der Sehne in Konflikt kommen, werden die Sehnen an den äußeren Spannpunkten häufig mechanisch seitlich ausgelenkt. Der dadurch entstehende Messfehler wird elektronisch kompensiert.

Für die Messung der Höhenlage der Gleise werden über beiden Schienen so genannte Nivellierseile gespannt. Die beiden Messpunkte über den Schienen werden meist über Winkelgeber abgetastet. Die Nivelliersehnen müssen oben angeordnet werden, da im unteren Bereich die Stopfaggregate und die Fahrwerke der Stopfmaschine im Weg sind. Diese Nivelliersehnen werden bis in die Kabinen der Stopfaggregate gezogen, wobei diese die freie Beweglichkeit des Personals in der Maschine einschränken. Stahlsehnen vibrieren (Verdichtfrequenzen liegen typisch bei 35 Hz) und hängen abhängig von der Seilspannkraft und dem Eigengewicht durch, was zu Ungenauigkeiten in der Messung führt. Beim Transport der Maschine müssen die Seile entspannt werden, da die Messwagen in Verriegelungsstellung gebracht werden. Oft werden diese Sehnen beim Transport beschädigt oder sie verheddern sich beim Spannvorgang. Das Auswandern der Nivelliersehnen im Gleisbogen in der Überhöhung des Gleises führt zu weiteren Systemfehlern die rechnerisch kompensiert werden müssen (so genanntes Absenkmaß). Die eingesetzten Distanzmesser müssen sehr leichtgängig sein und mit geringer Kraft abtasten, um das Messergebnis nicht zu verfälschen. Die Spiele der Mitnehmer die in die Stahlsehnen eingehakt sind sorgen für weitere Ungenauigkeiten.

Der Erfindung liegt somit die Aufgabe zugrunde, eine Vorrichtung, insbesondere eine optische Mess- und Steuereinrichtung, der eingangs geschilderten Art zu schaffen, welche die Nachteile der Stahlsehnenmesseinrichtungen vermeidet und höhere Messgenauigkeiten, universellere Einsatzmöglichkeiten und eine geringere Störanfälligkeit gewährleistet.

Die Erfindung löst die gestellte Aufgabe durch die Merkmale des Anspruchs 1. Der vordere und hintere der Messwagen sind erfindungsgemäß mit Positionsgebern in Form von Lichtanlagen ausgestattet die ein optisches Muster aussenden. Dem dazwischen befindlichen mittleren Messwagen sind zwei auf einer optischen Achse angeordnete optische Sensoren zugeordnet, wobei der eine Sensor zum vorderen und der andere zum hinteren Positionsgeber, bzw. Messwagen, gerichtet ist. Über die geometrisch bekannten Abstände der Messwagen zueinander und die Abbildungsmaßstäbe der optische Sensoren kann die Position der Positionsgeber auf der Sensorfläche beispielsweise einer Kamera mittels herkömmlicher Bildauswertungsprogramme ermittelt und daraus die Ist-Position des vorderen und des hinteren Messwagens im Gleis hinsichtlich Höhe und Seitenlage errechnet werden. Eine Gleisbaumaschine, beispielsweise eine Stopfmaschine zum Heben und Richten des Gleises in eine Soll-Position, kann dann durch Vergleich der gemessenen und errechneten Ist-Positionen mit den Soll-Positionen des Gleises entsprechend gesteuert und geregelt werden.

Dem vorderen und dem hinteren Messwagen ist gemäß der Erfindung je wenigstens ein Positionsgeber zugeordnet, der wiederum je wenigstens ein Positionslicht umfasst. Mehrere Positionslichter sind dabei in bestimmter geometrischer Anordnung und Größe zu je einer Leuchteinheit zusammengefasst, um eine Auswertung der Bilder zu vereinfachen. Eine Ausführung der Erfindung sieht vor, dass mehrere Lichtquellen (als Glühlampen oder Hochleistungs-LED) in geometrisch auswertbarer Form und eventuell in verschiedenen Farbtönen leuchtend aufgebaut werden. Gegebenenfalls kann der Positionsgeber auch ein mit einer Lichtquelle anstrahlbarer Reflektor sein. Auch der Reflektor(streifen) weist vorzugsweise eine definierte geometrische Form auf.

Besonders vorteilhaft ist es, wenn auf dem mittleren Messwagen zwei Digitalkameras oder PSD-Kameras, nämlich optische Positionssensoren, insbesondere mittig positioniert sind und auf einer optischen Achse derart liegen, dass die eine Kamera nach vorne und die andere nach hinten gerichtet ist. Optische Positionssensoren sind Sensoren, welche die ein- oder zweidimensionale Position von Lichtpunkten messen können. Solche Sensoren können in zwei Klassen eingeteilt werden: Zum einen gibt es analoge Sensoren, beispielsweise Position Sensitive Dioden (PSD), die lineare (kontinuierliche) Positionsinformation liefern und zum anderen diskrete digitale Sensoren, beispielsweise CCD-Kameras, deren Oberfläche rasterartig strukturiert ist und die eine diskrete Ortsinformation liefern. CCD-Kameras für diese Erfindung sollen dabei eine Größe von mindestens 4 Megapixel aufweisen.

Werden die Messwagen im Bogen seitlich und in der Höhenlage höhenmäßig ausgelenkt, dann nehmen die Kameras entsprechende Abbilder auf. Über den Abbildungsmaßstab der Kameras kann auf die reale Position der Messwagen zurückgerechnet werden und damit die Position der Kameras im Verhältnis dazu errechnet werden. Sollte in engen Gleisradien der Sichtbereich der Kameras nicht ausreichen, wird vorgeschlagen, die Leuchteinheiten, bzw. Reflektoren, auf einer Querverschiebeeinheit mit Verschiebepositionserfassung anzuordnen. Damit können die Positionsleuchten mit Hilfe einer mechanischen Verstelleinheit seitlich in den Sichtbereich der Kameras verschoben werden. Der Verstellweg kann über einen Verstellgeber gemessen werden. Dieser Verstellweg kann bei der rechnerischen Auswertung berücksichtigt werden.

Damit die Abbildungen der Positionslichter oder Reflektoren besonders gut bestimmbar sind, kann das Hintergrundbild subtrahiert werden. Dazu werden die Licht abstrahlenden Positionsgeber und die Kameras derart gesteuert, dass ein Bild mit eingeschalteten Positionslichtern (Reflektoren) und in weiterer Folge eines mit ausgeschalteten Positionslichtern (Reflektoren) aufgenommen und diese voneinander subtrahiert werden. Das Hintergrundbild und etwaige Darstellungsfehler werden somit herausgerechnet.

Die Lichter können verschiedenfärbig leuchtend ausgeführt werden. Ebenso können die Lichtfarben der Positionslichter mit einer Steuereinrichtung umschaltbar sein. Die Farbigkeit der einzelnen Lichtelemente kann von Bildaufnahme zu Bildaufnahme auch wechselnd ausgeführt werden (mehrfarbige LED's). Vorteile ergeben sich bei der Bildauswertung und möglicher Plausibilitätsprüfungen. Da die Arbeitsgeschwindigkeit von beispielsweise Stopfmaschinen sehr langsam ist (max. 2,5 km/h) kann davon ausgegangen werden, dass die beiden aufgenommenen Bilder hinsichtlich des Hintergrundes praktisch i-dent sind. Sind die Positionslichter kreuzförmig angeordnet, dann kann die Querneigung der äußeren Messwagen in Relation zum Kameramesswagen aus den Bilddaten errechnet werden. Bei Ausstattung des Kameramesswagens mit einem absoluten Querneigungsmesser (Pendel, Inklinometer o. dgl.) können auch die absoluten Neigungen der äußeren Messwagen errechnet werden. Bei Stopfmaschinen werden diese Neigungen über Pendel gemessen und zur Steuerung der Maschine verwendet. Die Querneigung muss nicht am Kamerawagen gemessen werden, die Messung kann auch an einem der äußeren Messwagen erfolgen. Über die mit der Kamera ermittelten Neigungswinkel, kann bei bekannter Absolutneigung eines der Messwagen auf die Neigungen der anderen Messwagen zurückgerechnet werden. Die Richt- und Hebevorgänge einer Stopfmaschine arbeiten mit Zeitkonstanten im Bereich zwischen 0,3 und 0,5s, daher ist eine Bildaufnahmerate von 50Hz ausreichend. Über konventionelle Bildauswertungssoftware kann die Mitte des optischen Kreuzes und die Neigung des Kreuzes in Gleisquerrichtung des Kamerabildes in Koordinaten und Winkeln angegeben werden.

Auf Grund von mechanischen Abnutzungen der Messräder und anderen Einflussgrößen müssen die Messanlagen von Stopfmaschinen von Zeit zu Zeit kalibriert werden. Idealerweise würde die Funktion der Messanlage stets vor Beginn einer Arbeitsphase überprüft. Konventionelle Messsysteme mit Stahlsehnen sind in der Regel mit analogen Schaltkreisen ausgestattet, die eine komplexe Justierung erfordern - daher ist eine automatisierte einfache und schnelle Überprüfung der Messanlage vor Beginn einer Arbeit praktisch nicht möglich. Bei der erfindungsgemäßen Ausführung können bei einer Ausführung mit mehreren Positionslichtern diese zur Kalibrierung des Abbildungsmaßstabes verwendet werden. Da die Distanzen und die Anordnung der Positionslichter definiert und vorgegeben sind, kann aus dem Abbild derselben auf der Sensorfläche der Abbildungsmaßstab errechnet (kalibriert) werden. Zu diesem Zweck können auch die einzelnen Leuchtelemente (LED's) eines Positionslichts getrennt geschaltet und aktiviert werden. Die beschriebene Kalibrierung kann jederzeit, automatisiert und schnell auch unmittelbar vor Beginn einer Stopfarbeit durchgeführt werden.

Vorteilhaft bei dieser erfindungsgemäßen Ausführung ist die trägheitslose optische Messachse anstelle der Stahlseile. Außerdem befindet sich die optische Achse insbesondere in der Gleismitte wo sie im Bereich der Arbeitsaggregate nicht störend wirkt. Da es kein Auswandern einer Sehne mit Systemfehlern wie bei Stahlsehnen und Nivelliergebern gibt, erhöht sich die erzielbare Messgenauigkeit erheblich. Des Weiteren entfallen die während des Transportes und des Aufrüstens häufig auftretenden Beschädigungen der Sehnen. Die gleichzeitige Erfassung der Richtlage, der Höhenlage und der Querneigung der Messwagen stellt einen weiteren Vorteil dar. Zudem treten beim Einsatz digitaler Kameras keine Offsetverschiebungen infolge Temperatur auf, wie dies bei den sonst meist eingesetzten analogen Wegsensoren der Fall ist.

In der Zeichnung ist der Erfindungsgegenstand beispielsweise dargestellt. Es zeigen

Fig. 1    eine Messanordnung mit gespannter Messsehne und mit Messsensor für die Gleisrichtung gemäß dem Stand der Technik in Draufsicht,

Fig. 2    eine Seitenansicht der Messanordnung nach Fig. 1,

Fig. 3    eine erfindungsgemäße Messanordnung in Draufsicht,

Fig. 4    die Messanordnung aus Fig. 3 in Seitenansicht,

Fig. 5    eine erfindungsgemäße Ausführung der Positionslichter,

Fig. 6    die erfindungsgemäße Ausführung mit Pendel am Kameramesswagen und mit schematisch dargestellten Kamerabildern,

Fig. 7    Kamerabilder bei der simultanen Darstellung von seitlicher und höhenmäßiger Auslenkung der äußeren Messwagen und

Fig. 8    ein aus den beiden Kamerabildern aus Fig. 7 zusammengesetztes Bild.

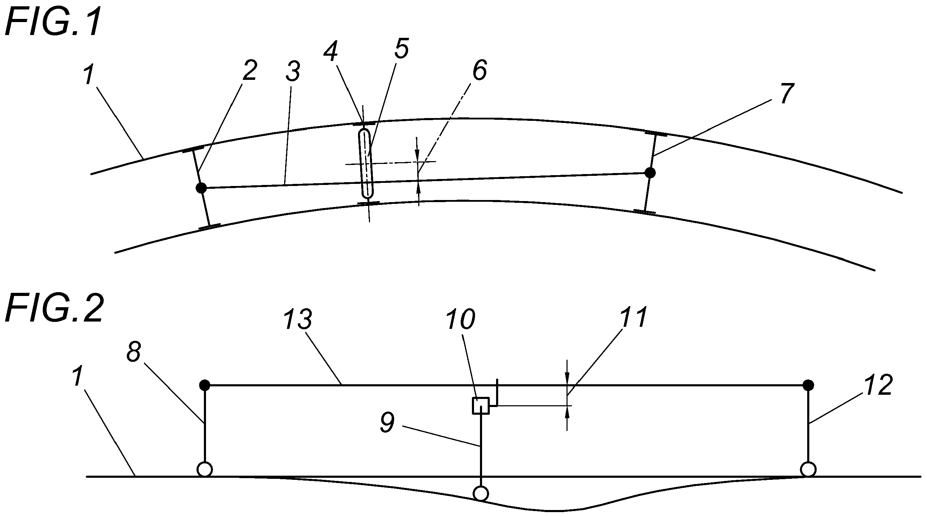

Bei Messeinrichtungen mit Stahlsehne 3 gemäß dem Stand der Technik (Fig. 1) bewegen sich im Gleis 1 zwei Spannwagen 2, 7. Der mittlere Richtmesswagen 4 trägt einen Distanzmesser 5 über den die Auslenkung 6 der Stahlsehne 3 gemessen wird. Spannwagen 2, 7 und mittlerer Richtmesswagen 4 sind vorzugsweise Teil einer Gleisbaumaschine, insbesondere der Hebe- Richtanlage. Abhängig von der bekannten Gleisgeometrie kann die Sollauslenkung bestimmt werden. Durch Vergleich mit der gemessenen Ist-Auslenkung 6 wird das Gleis über entsprechende Richtaggregate in die Soll-Lage gebracht und dort mittels Stopfung fixiert.

Bei konventionellen Messeinrichtungen mit Stahlsehne 13 für die Gleishöhe (Fig. 2) bewegen sich im Gleis 1 zwei Nivellierwagen 8, 12. Auf dem Nivellierwagen 9 befindet sich ein Nivelliergeber 10 welcher die Höhenabweichung 11 misst. Durch Vergleich der Soll-Höhe mit der derart gemessenen Ist-Höhe wird das Hebeaggregat der Stopfmaschine so gesteuert, dass die Abweichung null und das Gleis in dieser Position durch Stopfung fixiert wird.

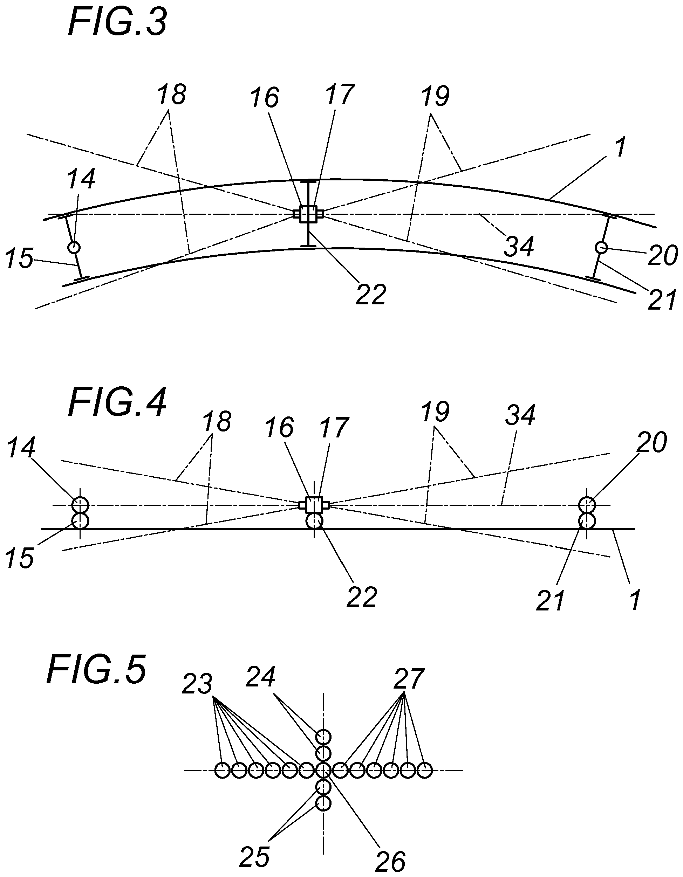

Bei einer erfindungsgemäßen Ausführung für die Richtung (Fig. 3) tragen die äußeren beiden im Gleis verfahrbaren Messwagen 15, 21 Positionsgeber 14, 20, nämlich Positionslichter oder Reflektorstreifen. Der mittlere Kameramesswagen 22 trägt zwei sich auf einer optischen Achse 34 angeordnete Kameras 16, 17 wobei eine 16 nach hinten zum Messwagen 14 und die andere Kamera 17 nach vorne zum Messwagen 21 gerichtet ist. Die Bildwinkelbereiche (Brennweite der Objektive) 18, 19 werden derart gewählt, dass die Positionslichter 14, 20 für die Kameras bei dem kleinsten zu bearbeitenden Gleisradius noch sichtbar sind.

Simultan wird die Gleishöhe (Fig. 4) aufgemessen. Die schematische Darstellung zeigt die erfindungsgemäße Anordnung aus seitlicher Sicht.

Eine mögliche Anordnung der Positionslichter zeigt Fig. 5. Die Positionslichter könnten als Hochleistungs-LED ausgeführt werden. Dabei können zur leichteren Auswertbarkeit und zur Plausibilitätsprüfung bei der Bildauswertung die LED verschiedenfärbig und färbig umschaltbar ausgeführt werden. Die LED 23 könnten z.B. rot/ grün, die LED 27 grün/rot, die Mitten-LED 26 weiss/gelb und LED 24 und 25 gelb/weiss leuchten.

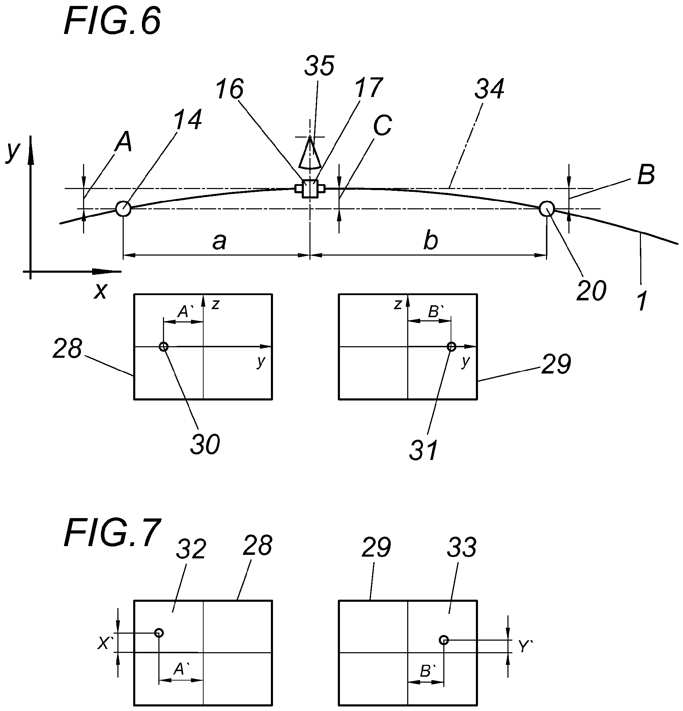

Die erfindungsgemäße Anordnung (Fig. 6) wird vereinfacht für die Richtung in Gleisachse 1 gezeigt. Am Kameramesswagen 22 wird zusätzlich ein Querneigungsmesser 35 angebracht. Die realen Auslenkungen der beiden äußeren Positionslichter 14, 20 zur Kameraposition 16,17 sind A und B. In Gleislängsrichtung ist die Koordinatenachse x definiert, die Gleisquerrichtung wird als y-Achse und die Hochachse als z-Achse definiert. Die äußeren Positionsmesswagen die gleisfahrbar ausgeführt sind, befinden sich in den Abständen a und b vom Kameramesswagen. Typischerweise hat a eine Länge zwischen 4 und 6m und b eine Länge zwischen 8 und 12m. Die seitlichen Auslenkungen betragen bis 0,8m aus der Gleismitte und die Höhenauslenkungen bis 0,4m aus der Mittellage. Die Auslenkung der Kameras zur gedachten Verbindungslinie der beiden Positionslichter ergibt sich dann zu C. Die beiden Kameraabbilder 28, 29 zeigen die Position der Positionslichter 30, 31 am Bildschirm analog mit den Abständen A' und B'.

Für die Position C der Kamera 16, 17 in Bezug auf die Verbindungslinie der beiden Positionslichter 14, 20 ergibt sich dann (vorzeichenbereinigt) (Fig.7):

$$C = \frac{1}{a+b} \cdot (b \cdot A + a \cdot B)$$

wobei sich A und B aus den Kameraauswertungen und dem Abbildungsmaßstab ($M_1$, $M_2$) wie folgt errechnen:

$$A = M_1 \cdot A'$$

$$B = M_2 \cdot B'$$

Bei seitlicher und vertikaler Auslenkung der Positionslichter (Fig. 7) wird simultan zur seitlichen Auslenkung auch die vertikale wie folgt ermittelt:

$$Z = \frac{1}{a+b} \cdot (b \cdot X + a \cdot Y)$$

wobei sich X und Y aus den Kameraauswertungen und dem Abbildungsmassstab analog wie folgt errechnen:

$$X = M_1 \cdot X'$$

$$Y = M_2 \cdot Y'$$

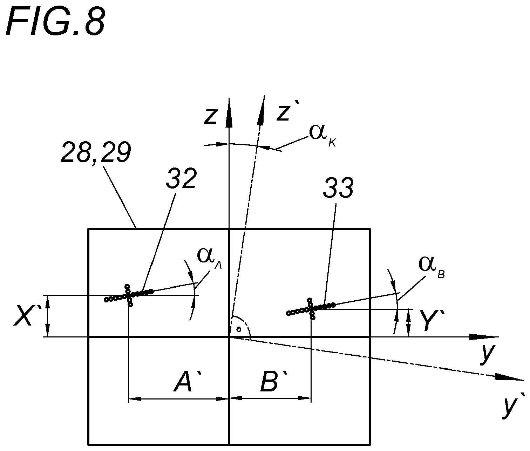

Fig. 8 zeigt die Positionslichter 32, 33 aus Fig. 7 in einem vereinigten Bild 28, 29. Die beiden Positionslichter 32, 33 seien nun infolge der an den äußeren Messwagen herrschenden Querneigung um die Winkel $\alpha_A$ und $\alpha_B$ bezüglich der Kameraachse geneigt. Um die realen Neigungen zu ermitteln wird das Koordinatensystem mit Hilfe der gemessenen Kameraneigung $\alpha_K$ gedreht. Damit kann durch die Messung der Kameraneigung die absolute Neigung $\alpha_A$ des hinteren und vorderen Messwagens $\alpha_B$ ermittelt werden.

## Patentansprüche

1. Vorrichtung zum Vermessen von Gleisen zur Steuerung und Regelung von Gleisbaumaschinen, mit zwei äußeren, einem vorderen und einem hinteren, gleisfahrbaren Messwagen (15, 21) und einem dazwischen angeordneten mittleren gleisfahrbaren Messwagen (22), wobei den äußeren Messwagen (15, 21) je wenigstens ein zum mittleren Messwagen (22) weisender Positionsgeber (14, 20) zugeordnet ist und am mittleren Messwagen ein Empfänger angeordnet ist, **dadurch gekennzeichnet, dass** am mittleren Messwagen (22) wenigstens zwei optische Sensoren (16, 17), insbesondere Kameras, als Empfänger derart auf einer optischen Achse (34) angeordnet sind, dass wenigstens ein optischer Sensor zum hinteren Messwagen (15) und wenigstens ein anderer optischer Sensor zum vorderen Messwagen (21) gerichtet ist und dass die Positionsgeber (14, 20) Positionslichter (23, 24, 25, 26, 27) sind, die in bestimmter geometrischer Anordnung derart zu je einer Leuchteinheit zusammengefasst sind, dass sie ein optisches Muster aussenden, womit die Ist-Position des vorderen und des hinteren Messwagens im Gleis hinsichtlich Höhe und Seitenlage mittels der geometrisch bekannten Abstände der Messwagen zueinander und der Abbildungsmaßstäbe der optischen Sensoren errechnet wird und durch Vergleich mit einer Soll-Position des Gleises die Gleisbaumaschine steuer- und regelbar ist.

2. Vorrichtung nach Anspruch 1, **dadurch gekennzeichnet, dass** die optischen Sensoren (16, 17) Digitalkameras sind.

3. Vorrichtung nach Anspruch 1 oder 2, **dadurch gekennzeichnet, dass** die optischen Sensoren PSD-Kameras (16, 17), nämlich optische Positionssensoren sind.

4. Vorrichtung nach einem der Ansprüche 1 bis 3 **dadurch gekennzeichnet, dass** die Positionslichter (23, 24, 25, 26, 27) verschiedene Lichtfarben aufweisen.

5. Vorrichtung nach einem der Ansprüche 1 bis 4, **dadurch gekennzeichnet, dass** die Lichtfarben der Positionslichter (23, 24, 25, 26, 27) mit einer Steuereinrichtung umschaltbar sind.

6. Vorrichtung nach einem der Ansprüche 1 bis 5, **dadurch gekennzeichnet, dass** die einzelnen Positionslichter (23, 24, 25, 26, 27) eines Positionsgebers (14, 20) unabhängig voneinander mit einer Steuereinrichtung umschaltbar und ansteuerbar sind.

7. Vorrichtung nach einem der Ansprüche 1 bis 6, **dadurch gekennzeichnet, dass** die Licht abstrahlenden Positionsgeber (14, 20) und die Kameras (16, 17) derart gesteuert sind, dass die Kameras (16, 17) abwechselnd Bilder von Licht abstrahlenden Positionsgebern (14, 20) und Bilder von ausgeschalteten Positionsgebern (14, 20) aufnehmen.

8. Vorrichtung nach einem der Ansprüche 1 bis 7 **dadurch gekennzeichnet, dass** mindestens einem der Messwagen (22) ein Querneigungsmesser (34) zugeordnet ist.

9. Vorrichtung nach einem der Ansprüche 1 bis 8 **dadurch gekennzeichnet, dass** die Leuchteinheiten (14, 20) auf einer Querverschiebeeinheit mit Verschiebepositionserfassung angeordnet sind.

## Claims

1. Device for measuring tracks for controlling and regulating track-laying machines, comprising two outer, one front and one rear measurement carriages (15, 21), which can travel on tracks, and a middle measurement carriage (22) which is arranged therebetween and can travel on tracks, wherein the outer measurement carriages (5, 21) are allocated in each case at least one position encoder (14, 20) which points towards the middle measurement carriage (22) and a receiver is arranged on the middle measurement carriage, **characterised in that** at least two optical sensors (16, 17), in particular cameras, are arranged as receivers on the middle measurement carriage (22) on an optical axis (34) such that at least one optical sensor is directed towards the rear measurement carriage (15) and at least one other optical sensor is directed towards the front measurement carriage (21), and **in that** the position encoders (14, 20) are position lights (23, 24, 25, 26, 27) which are combined in a specific geometric arrangement to form in each case a lighting unit such that they emit an optical pattern, whereby the actual position of the front and the rear measurement carriage on the track is calculated in terms of height and lateral position by means of the geometrically known spaced intervals between the measurement carriages and the imaging scales of the optical sensors and the track-laying machine can be controlled and regulated by comparison with a desired position of the track.

2. Device as claimed in claim 1, **characterised in that** the optical sensors (16, 17) are digital cameras.

3. Device as claimed in claim 1 or 2, **characterised in that** the optical sensors are PSD cameras (16, 17), namely optical position sensors.

4. Device as claimed in any one of claims 1 to 3, **characterised in that** the position lights (23, 24, 25, 26, 27) have various light colours.

5. Device as claimed in any one of claims 1 to 4, **characterised in that** the light colours of the position lights (23, 24, 25, 26, 27) can be switched by means of a control apparatus.

6. Device as claimed in any one of claims 1 to 5, **characterised in that** the individual position lights (23, 24, 25, 26, 27) of a position encoder (14, 20) can be switched and activated independently of one another by means of a control apparatus.

7. Device as claimed in any one of claims 1 to 6, **characterised in that** the light-emitting position encoders (14, 20) and the cameras (16, 17) are controlled in such a manner that the cameras (16, 17) alternately record images of light-emitting position encoders (14, 20) and images of deactivated position encoders (14, 20).

8. Device as claimed in any one of claims 1 to 7, **characterised in that** at least one of the measurement carriages (22) is allocated a transverse inclination meter (34).

9. Device as claimed in any one of claims 1 to 8, **characterised in that** the lighting units (14, 20) are arranged on a transverse displacement unit comprising displacement position detection.

## Revendications

1. Dispositif destiné à mesurer des voies ferrées, pour piloter et régler des machines de chantier pour voies ferrées, avec deux chariots de mesure externes (15, 21), un à l'avant et un à l'arrière, pouvant se déplacer sur la voie ferrée, et un chariot de mesure médian (22) placé entre et pouvant également se déplacer sur la voie ferrée, respectivement au moins un élément donneur de position (14, 20) orienté vers le chariot de mesure médian (22) étant adjoint aux chariots de mesure externes (15, 21), et un récepteur étant disposé au niveau du chariot de mesure médian, **caractérisé en ce qu'**au niveau du chariot de mesure médian (22), au moins deux capteurs optiques (16, 17), en particulier des caméras, sont disposés en tant que récepteur sur un axe optique (34), de sorte qu'au moins un capteur optique est orienté vers le chariot de mesure arrière (15), et au moins un autre capteur optique est orienté vers le chariot de mesure avant (21) et **en ce que** les éléments donneurs de position (14, 20) sont des feux de position (23, 24, 25, 26, 27) qui, dans une certaine disposition géométrique, sont regroupés en une unité d'éclairage de sorte qu'ils émettent un motif optique, grâce à quoi la position réelle des chariots de mesure avant et arrière est calculée, dans la voie, en ce qui concerne la hauteur et la position latérale, au moyen des espaces connus géométriquement des chariots de mesure les uns avec les autres et des rapports de grossissement des capteurs optiques et la machine de chantier pour voies ferrées peut être pilotée et réglée par comparaison avec une position théorique de la voie ferrée.

2. Dispositif selon la revendication 1, **caractérisé en ce que** les capteurs optiques (16, 17) sont des caméras numériques.

3. Dispositif selon la revendication 1 ou 2, **caractérisé en ce que** les capteurs optiques sont des caméras PSD (16, 17), à savoir des capteurs de position optiques.

4. Dispositif selon l'une des revendications 1 à 3, **caractérisé en ce que** les feux de position (23, 24, 25, 26, 27) présentent des couleurs de lumière différentes.

5. Dispositif selon l'une des revendications 1 à 4, **caractérisé en ce que** les couleurs de lumière des feux de position (23, 24, 25, 26, 27) peuvent être commutées avec un dispositif de commande.

6. Dispositif selon l'une des revendications 1 à 5, **caractérisé en ce que** les feux de position individuels (23, 24, 25, 26, 27) d'un élément donneur de position (14, 20) peuvent être commutés et commandés indépendamment les uns des autres avec un dispositif de commande.

7. Dispositif selon l'une des revendications 1 à 6, **caractérisé en ce que** les éléments donneurs de position (14, 20) émettant la lumière et les caméras (16, 17) sont pilotés de sorte que les caméras (16, 17) prennent alternativement des images des éléments donneurs de position (14, 20) émettant la lumière et des images des éléments donneurs de position (14, 20) désactivés.

8. Dispositif selon l'une des revendications 1 à 7, **caractérisé en ce qu'**un dispositif de mesure d'inclinaison transversale (34) est associé au moins à un des chariots de mesure (22).

9. Dispositif selon l'une des revendications 1 à 8, **caractérisé en ce que** les unités d'éclairage (14, 20) sont disposées sur une unité de déplacement transversal avec saisie de la position de déplacement.

FIG.1

FIG.2

EP 2 960 371 B1

**FIG.3**

**FIG.4**

**FIG.5**

FIG.6

FIG.7

FIG.8

**EP 2 960 371 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 135610 A1
- US 4155176 A
- US 3107168 A
- DE 10337976 A